# EUROPEAN PATENT APPLICATION

(11) **EP 1 669 842 A1**
(43) Date of publication of application: **14.06.2006**
(21) Application number: 04028597.5
(22) Date of filing: 02.12.2004
(51) Int. Cl.: G06F 3/033

(54) **Input device with different modes**

(71) Applicant: 3Dconnexion GmbH, 82229 Seefeld (DE)
(72) Inventor: Schröder, Michael, 82229 Seefeld (DE)
(74) Representative: Rupp, Christian

(57) **Abstract**

An input device for manual input of control signals for a computer-controlled device (12) comprises:
- a manipulation member which is displaceable in 3 degrees-of freedom relative to a base part of the input device,
- converting means for converting the relative displacements of the manipulation member into electrical signals, and
- manually operable means for switching between a first mode in which a first set of degrees-of-freedom of the relative displacement of the manipulation member is used for generating control signals on the basis of the electrical signals and a second mode in which a second set of degrees-of-freedom of the relative displacement of the manipulation member is used for generating control signals on the basis of the electrical signals.

The first set of degrees-of-freedom is different from the second set of degrees-of-freedom.

## Description

### Field of the Invention

The present invention relates to devices and methods for providing a user interface for a computing or computer-related environment. A computer-related environment is any device, which can be computer-controlled, such as e.g. robots or other computer-controlled machinery. More particularly, the invention relates to an user interface device and methods with which a user can manually input control signals in a computing or a computer-related environment. The input control signals can be used in order to control real objects (robots etc.) or virtual screen objects (cursor etc.).

The present invention has particular application as a manually operated device that serves as a control signal input interface for a user in the manipulation and processing of digital information, such as digital images, and it will be convenient to describe the invention in this exemplary context. However, it will be appreciated that the invention is not limited to this application, but may for example also find the application in the control of a wide range of robotic and other automated machinery.

### Background of the invention

Hand-operated devices for user input of control signals in computing or digital applications are available for a long time in the market-place. The most known of these devices include the mouse input device in its various forms, as well as the joy stick and the track ball.

US 2003/0103217 describes a sensor arrangement for the detection of a relative movement or the relative position of two objects, as well as to the in cooperation of such a sensor arrangement in a user interface device for inputting control signals in a computing environment.

Input devices having three degrees-of-freedom or more are known from the prior art. In some of these known devices a manually operated member can be displaced in rotation and translation relative to a base member. Actually a total of six degrees-of-freedom can be provided, i. e. three translational and three rotational degrees-of-freedom.

In case any displacement of the manipulation member is carried out against a feedback force provided e.g. via springs or resilient elements, the devices also often called a "force-feedback sensor". When applying a constant torque or force on the manipulation member of such a force feedback sensor, this will result in a constant displacement of the manipulation member vis-à-vis the base part of the input device. Such a time-invariable displacement will be translated into a time-constant speed of a controlled object, such as e.g. a screen object (cursor etc.). Therefore, as an application of a time-invariable torque or force leads to a time-invariable speed of a controlled virtual or real object, such a technique is sometimes also called "speed control".

As soon as no force or torque is applied anymore to a force-feedback sensor, the manipulation member will automatically return to its zero or "home" position.

This is in contrast to traditional mouse input devices in which no feedback force is present. When applying a time-invariable force onto a mouse input device, the mouse input device will carry out an endless motion relative to a support surface as there is no feedback force.

A constant time-invariable "displacement" of a mouse, i. e. a mouse which is no longer moving relative to the support, is usually translated into a constant position of the controlled object (cursor etc.). Therefore, this technology is also often called "position control". To summarise, while according to the force-feedback, speed-control approach a time-invariable displacement of the manipulation member leads to a constant speed of the controlled object, according to the position control without force-feedback a constant displacement is translated into a constant position of the controlled object. As no force-feedback is provided, the mouse will simply keep its position as soon as no force is applied anymore.

A 3D input device is very convenient for example in the application context CAD-programs, robot control etc. On the other hand, the user of a CAD-program, will sometimes desire to input two-dimensional control commands only, e.g. for the manual control of the target software application. In the prior art it is therefore proposed to connect both a 3d input device and a physically separated 2d input device to the controlled device, such that the 3d input device can be used by one hand of the user while the 2d input device can be used by the other hand of the user.

A certain improvement has been achieved e.g. by the device shown in DE 101 46 473 A1 proposing to incorporate both a 2D and a 3d sensor in the same input device. This still has the disadvantage that the two different sensors have different positions at the input device, such that the user has to change the position of his/her fingers in order to selectively manipulate the 3d or the 2d sensor. Additionally the two different sensors give a different feedback to the user's hand.

It is therefore the object of the present invention to enlarge the application range of a 3D input device.

### Summary of the invention

According to the present invention the above-mentioned object is achieved by means of the features of the independent claims. The dependent claims develop further the central idea of the present invention.

According to a first aspect of the present invention an input device for a manual input of control signals for a computer-controlled device is proposed. The input device comprises a manipulation member which is displaceable, in at least three degrees-of-freedom, relative to a base part of the input device. Converting means translate the relative (mechanical) displacements of the manipulation member into electrical signals. The electrical signals can then be converted into digital control signals for the device to be controlled. This conversion into control signals can take place in the input device and/or in the device to be controlled.

According to the invention the input device is designed to be selectively put in at least a first mode and a second mode. In the first mode a first set of degrees-of-freedom of the relative displacement of the manipulation member is used for generating control signals on the basis of the electrical signals. In the second mode a second set, different to the first mentioned set, of degrees-of-freedom of the relative displacement of the manipulation member is used for generating control signals on the basis of the electrical signals.

Therefore, the input device according to the present invention can be switched e.g. between a 2D and 3D operation mode in which only 2d signals and 3d signals, respectively, are processed..

Preferably this switching is only carried out on a software level. In this example a manually operable switching means can be arranged to act on a processing unit for converting the electric signals into control signals. The processing unit can thereby be part of the input device itself and/or part of the computer-controlled device.

The processing unit can run a firmware program product or a driver software product which are designed to generate the control signals for the computer-controlled device based on the supplied electrical signals from the conversion means.

The manually operable switching means to switch between the at least two different modes of the input device can e.g. be a button or a touch-screen or any other additional input device provided at the input device itself, at the computer-controlled device or at an additional input device such as for example a keyboard.

According to another aspect of the present invention an input device can be switched between a first mode in which all three degrees of freedom of the relative displacement of the manipulation member are used for generating control signals and a second mode in which only a subset of the three degrees of freedom of the relative displacement is used. This subset can e. g. be only two degrees or one degree-of-freedom of the relative displacement.

In case the switching between the first and the at least one second mode is carried out on a software level, no physical changes occur when switching between these two modes such that in both the first and the second mode the manipulation member can be displaceable relative to the base member against the feedback force. In other words, both in the first and the second mode the input device can act as a force feedback sensor.

According to another aspect of the present invention a method for operating an input device for manual input of control signals for a computer-controlled device is proposed. The method thereby comprises the step of manually switching the input device between a first mode in which a first set of degrees-of-freedom of the relative displacement of the manipulation member is used for generating control signals on the basis of the electrical signals, and a second mode in which a second set of degrees-of-freedom of the relative displacement of the manipulation member is used for generating control signals on the basis of the electrical signals.

The switching between the first and the second mode can be effected by a processing unit in the input device or in the computer-controlled device.

The pressing unit can run a driver software or a firmware.

According further aspects of the present invention a computer software program products are proposed which support a method as stated above when running in a computing device. The computer software program products can e.g. be a firmware implemented in a microprocessor, preferably within the input device, or a driver software.

### Brief description of the drawings

Particular embodiments of the user interface input device according to the present invention are now described by way of example with reference to the accompanying drawings, in which like reference characters described like parts without the several views, and in which
Fig. 1 is schematic perspective view of an input device, and
Fig. 2 is a schematic block diagram showing elements applicable within the frame work of the present invention.

### Detailed description of the preferred embodiments

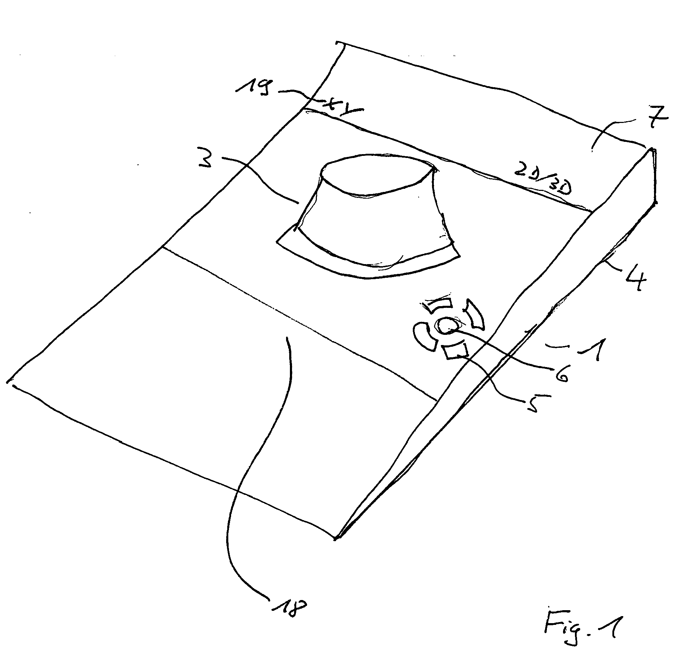

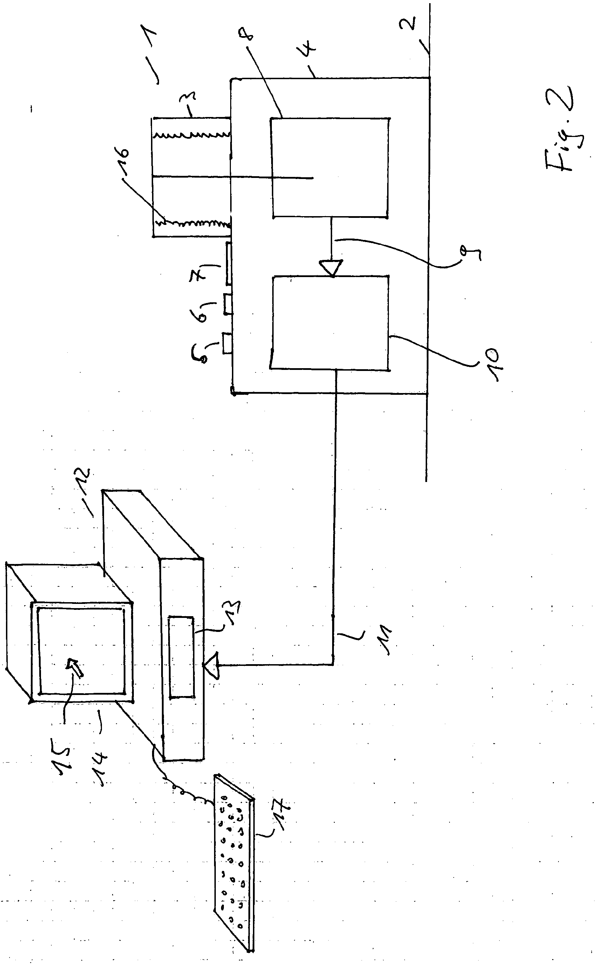

Referring firstly to fig. 1, a perspective view of an input device 1 according to the present invention is explained. The input device 1, e.g. be geometrically designed to rest on a support surface (2 in fig. 2) when used. On the upper side of a base part 4 of the input device 1 a manipulation member 3 is provided e.g. in the form of relatively large upstanding knob-like elements. The manipulation member 3 is designed to be displaced vis-a-vis the base part 4 when a torque and/or force is applied to it.

The palm of the user's hand can rest on a palm support 18 when manipulating the member 3.

On the upper surface of the base part 4 of the input device 1 additionally, e. g. a display 7 and additional buttons 5, 6 are provided.

The manipulation member 3 can be displaced in at least three degrees-of-freedom relative to the base part 4 of the input device 1. E.g. the manipulation members 3 can be displaced in three rotational and three translational degrees-of-freedom vis-à-vis the base part 4 of the input device 1.

As shown in fig. 2, force feedback elements such as for example springs 16 can be provided such that the manipulation member 3 acts as a force and torque feedback sensor. The displacements of the manipulation member 3 vis-à-vis the base part 4 of the input device 1 are detected by a converter 8 translating these mechanical displacements into electrical signals 9. The converter 8 can e. g. be an opto-mechanical set-up comprising diodes and photodetectors. An example of a suitable opto-mechanical set-up is shown e.g. in DE 10158777 A1 (US 2003/103217). Other converters such as e.g. mechanical converters (adjustable resistors, strain gauges etc.) cam be used alternatively.

Optionally, the electrical signals can be sent to a processing unit 10 housed within the base part 4 of the input device 1.

Alternatively, the electrical signals 9 can be sent, without prior conversion into command signals, to a device 12 to be controlled via communication channel 11 which can be wire-bound or wireless.

The A/D conversion of the electrical signals as well as a basic signal processing (filtering etc.) are preferably carried out in the input device.

As already stated in the introductory portion of the specification, the computer-controlled device 12 can be a computer as shown in fig. 2, a robot, machinery or any other computer-controlled electrical or electronical device.

As it is well known the computing device 12 houses a computing unit 13 and is operationally connected to a screen 14. The cursor 15 in fig. 2 is showing just one example for a virtual screen object which can be controlled via the input device 1. In the same manner other virtual objects or real devices such as for example robot arms can be controlled via the input device 1.

Additional input devices such as for example a keyboard 17, track balls or a mouse can be connected to the computer-controlled device 12.

### Different modes:

A device according to the present invention can switched between at least two modes.

### First mode:

In a first mode of the device 1 according to the present invention the input device 1 behaves as a well known three-dimensional feedback sensor.

### Second mode:

In a second mode, a different set of degrees-of-freedom, preferably a subset of the total number of degrees of freedom of the displacements of the manipulation member 3 vis-à-vis the base part of the device 1 is used for generating control signals for the computer control device 12.

### Further modes:

Further modes can be foreseen in which alternative sets or subsets of processed degrees-of-freedom are defined.

### Programming of the modes:

The different modes can be at least partially pre-set when manufacturing the input device.

Optionally the input device can be set in a configuration mode in which the user can define which degrees-of-freedom should be associated with the respective modes. This mapping of the degrees-of-freedom to the different modes can be assisted visually by means of the display 7 of the input device and/or the screen of the computer-controlled device.

### Switching between the modes:

To trigger the switching between the different modes the base part 4 of the input device 1 can be provided with a switch button 6. The manipulation of the switch button 6 by a user is detected and processed as a switching signals between the mentioned different second modes of the input device 1. The manipulation of the switch button 6 can thereby be fed to the processing unit 10 being part of the input device 1 or directly to the computer-controlled device 12 via the communication channel 11.

Note that the switching between the different modes can also be triggered by a predefined manipulation of the manipulation member, in which case there is no need for a separate switching device.

In case the switching button manipulation is fed to the processing unit 10, the processing unit 10 will run a firmware which is programmed to translate selectively a first and a second set of degrees of freedom of the mechanical displacement of the manipulation member 1 into control signals for the computer-controlled device 12.

In case the manipulation of the switch button 6 is directly fed to the computer-controlled device 12, a driver software application can be run on said computer-controlled device 12 and the driver software application will take over the selective translation of the first and the second set of degrees-of-freedom of the mechanical displacements.

Note that when in the above explanations it is stated that the mechanical displacements are translated into control signals, it is obvious that a software application actually translates electric signals representing those mechanical displacements into digital command signals for a program run in the computer-controlled device 12.

Note that additionally or alternatively to the switch button 6 the switching between the mentioned modes can also be triggered directly on the computer-controlled device 12 or on any other functionally connected device, such as for example the shown keyboard 17.

Preferably, when switching between the first and the second mode no physical change occurs at the input device 1. With other words, in both modes the manipulation member 3 can be displaced in all possible degrees-of-freedom relative to the base part 4 of the input device 1 and in both modes the manipulation member 3 will behave as a force/torque-feedback sensor.

Note that alternatively or additionally, when switching between the first and the second mode, also physical changes can be triggered. E. g. in the first mode the input device can behave as a feedback sensor with speed control (see the explanations in the opening section of the present specification) while in the second mode the input device can behave according to a two-dimensional positional control. In such a case, in the second mode, when only a subset of degrees-of-freedom is used for generating control signals, those degrees-of-freedom which are no longer used can actually be physically blocked such that the manipulation member 3 is only displaceable in the degrees-of-freedom which are still available. In the same manner the force-feedback can be activated/deactivated when switching from one mode to another mode.

The current mode activated can be visualised e. g. at the display 7 of the input device 1, via the current position of the switching button 6, and/or a the screen 17 of the computer-controlled device 12.

The display 7 can inform the user also on other relevant facts, such as e.g. the target application 19 currently controlled by the input device 1.

### List of reference signs

- 1: Input device
- 2: Support
- 3: Manipulation member
- 4: Base part
- 5: Mode switch element
- 6: Button/wheel
- 7: Display of the input device
- 8: Mechano/Electrical-Converter
- 9: Electric signal
- 10: Signal processing unit
- 11: Input signal transmission channel
- 12: Computer-controlled device
- 13: Computing device
- 14: Screen
- 15: Screen object (e.g. cursor)
- 16: Force-feedback member
- 17: Keyboard
- 18: Palm rest
- 19: Additional information on display 7

## Claims

1. An input device for manual input of control signals for a computer-controlled device (12),
the input device (1) comprising:
- a manipulation member (3) which is displaceable in at least three degrees-of-freedom relative to a base part (4) of the input device (1),
- converting means (8) for converting the relative displacements of the manipulation member (3) into electrical signals,
wherein the input device is designed to be selectively put at least in a first mode in which a first set of degrees-of-freedom of the relative displacement of the manipulation member (3) is used for generating control signals on the basis of the electrical signals, and a second mode in which a second set of degrees-of-freedom of the relative displacement of the manipulation member (3) is used for generating control signals on the basis of the electrical signals,
the first set of degrees-of-freedom being different from the second set of degrees-of-freedom.

2. A device according to claim 1,
**characterized in that**
the second set is a subset of the degrees-of-freedom of the first set.

3. A device according to claim 1,
**characterized in that**
the second set comprises an alternative set to the degrees-of-freedom of the first set.

4. A device according to any of the preceding claims,,
**characterized in that**
a manually operable switching means (5) is arranged to act on a processing unit for converting the electric signals into control signals,
the processing unit being part of the input device or the computer-controlled device.

5. A device according to claim 4,
**characterized in that**
the processing unit is running a firmware program product or a driver software product.

6. A device according to any of the preceding claims,
**characterized in that**
the manually operable switching means (5) is a button or a touch screen.

7. An input device for manual input of control signals for a computer-controlled device (12),
the input device (1) comprising:
- a manipulation member (3) which is displaceable in 3 degrees-of freedom relative to a base part (4) of the input device,
- converting means (8) for converting the relative displacements of the manipulation member into electrical signals, and
- manually operable means (5) for switching between a first mode in which all 3 degrees-of-freedom of the relative displacement of the manipulation member is used for generating control signals on the basis of the electrical signals and a second mode in which only a subset of the 3 degrees-of-freedom of the relative displacement of the manipulation member is used for generating control signals on the basis of the electrical signals.

8. The input device according to any of the preceding claims,
**characterized in that**
in both the first and the second mode the manipulation member (3) is displaceable relative to the base member (4) against a feedback force.

9. The input device according to any of the preceding claims,
**characterized in that**
the input device (1) is provided with a configuration function allowing the user a programming of the different modes can.

10. A method for operating an input device for manual input of control signals for a computer-controlled device (12), the input device (1) comprising:
- a manipulation member (3) which is displaceable in 3 degrees-of freedom relative to a base part of the input device, and
- converting means (8)for converting the relative displacements of the manipulation member (3) into electrical signals,
the method comprising the step of
- switching the input device between a first mode in which a first set of degrees-of-freedom of the relative displacement of the manipulation member is used for generating control signals on the basis of the electrical signals and a second mode in which a second set of degrees-of-freedom of the relative displacement of the manipulation member is used for generating control signals on the basis of the electrical signals,
the first set of degrees-of-freedom being different from the second set of degrees-of-freedom.

11. A method for controlling an input device for manual input of control signals for a computer-controlled device (12),
the input device (1) comprising:
- a manipulation member (3) which is displaceable in 3 degrees-of freedom relative to a base part of the input device, and
- converting means for (8) converting the relative displacements of the manipulation member (3) into electrical signals,
wherein the method comprises the step of
switching between a first mode in which all 3 degrees-of-freedom of the relative displacement of the manipulation member is used for generating control signals on the basis of the electrical signals and a second mode in which only a subset of the 3 degrees-of-freedom of the relative displacement of the manipulation member is used for generating control signals on the basis of the electrical signals.

12. A method according to any of claims 10 or 11,
wherein, upon manual user operation, the switching between the first and the second mode is effected by a processing unit in the input device or the computer-controlled device.

13. A method according to claim 12,
wherein the processing unit is running a driver software.

14. A method according to claim 12,
wherein the processing unit is part of the input device and is running a firmware program for the switching between the first and the second mode.

15. A method according to claim 10 or 11,
**characterized in that**
the second set is a subset of the degrees-of-freedom of the first set.

16. The method according to claim 10 or 11,
**characterized in that**
the second set comprises an alternative set to the degrees-of-freedom of the first set.

17. The method according to any of the preceding claims,
**characterized in that**
the different modes are programmed by the user.

18. A computer software program product,
supporting a method according to any of claims 10 to 17 when running on a computing device.

19. A computer software program product,
**characterized in that**
it is a firmware or a driver software.

## Amended claims

### Amended claims in accordance with Rule 86(2) EPC.

**1.** An input device for manual input of control signals for a computer-controlled device (12),
the input device (1) comprising:
- a manipulation member (3) which is displaceable in 3 degrees-of freedom relative to a base part (4) of the input device,
- converting means (8) for converting the relative displacements of the manipulation member into electrical signals, and
- manually operable means (5) for switching between a first mode in which all 3 degrees-of-freedom of the relative displacement of the manipulation member is used for generating control signals on the basis of the electrical signals and a second mode in which only a subset of the 3 degrees-of-freedom of the relative displacement of the manipulation member is used for generating control signals on the basis of the electrical signals,
wherein in the first mode both rotational and translational displacements are used for generating control signals.

**2.** A device according to any of the preceding claims,,
**characterized in that**
a manually operable switching means (5) is arranged to act on a processing unit for converting the electric signals into control signals,
the processing unit being part of the input device or the computer-controlled device.

**3.** A device according to claim 1 or 2,
**characterized in that**
the processing unit is running a firmware program product or a driver software product.

**4.** A device according to any of the preceding claims,
**characterized in that**
the manually operable switching means (5) is a button or a touch screen.

**5.** The input device according to any of the preceding claims,
**characterized in that**
in both the first and the second mode the manipulation member (3) is displaceable relative to the base part (4) against a feedback force.

**6.** The input device according to any of the preceding claims,
**characterized in that**
the input device (1) is provided with a configuration function allowing the user a programming of the different modes.

**7.** A method for controlling an input device for manual input of control signals for a computer-controlled device (12),
the input device (1) comprising:
- a manipulation member (3) which is displaceable in 3 degrees-of freedom relative to a base part of the input device, and
- converting means for (8) converting the relative displacements of the manipulation member (3) into electrical signals,
wherein the method comprises the step of switching between a first mode in which all 3 degrees-of-freedom of the relative displacement of the manipulation member is used for generating control signals on the basis of the electrical signals and a second mode in which only a subset of the 3 degrees-of-freedom of the relative displacement of the manipulation member is used for generating control signals on the basis of the electrical signals,
wherein in the first mode both rotational and translational displacements are used for generating control signals.

**8.** A method according to any of claims 7,
wherein, upon manual user operation of the manually operable switching means, the switching between the first and the second mode is effected by a processing unit in the input device or the computer-controlled device.

**9.** A method according to claim 7 or 8,
wherein the processing unit is running a driver software.

**10.** A method according to any of claims 7 to 9,
wherein the processing unit is part of the input device and is running a firmware program for the switching between the first and the second mode.

**11.** The method according to any of claims 7 to 10,
**characterized in that**
the different modes are programmed by the user.

**12.** A computer software program product,
supporting a method according to any of claims 7 to 11
when running on a computing device.

**13.** A computer software program product according to claim 12,
**characterized in that**
it is a firmware or a driver software.
